## Europäisches Patentamt
## European Patent Office
## Office européen des brevets

(19)

(11) Numéro de publication: **0 073 687**
**B1**

(12)
# FASCICULE DE BREVET EUROPEEN

(45) Date de publication du fascicule du brevet:
10.04.85

(51) Int. Cl.⁴: **B 23 Q 3/157**

(21) Numéro de dépôt: 82401223.1

(22) Date de dépôt: 30.06.82

(54) Dispositif de changement automatique d'outil pour machine-outil.

(30) Priorité: **12.08.81 FR 8115587**

(43) Date de publication de la demande:
**09.03.83 Bulletin 83/10**

(45) Mention de la délivrance du brevet:
**10.04.85 Bulletin 85/15**

(84) Etats contractants désignés:
**AT BE CH DE GB IT LI LU NL SE**

(56) Documents cités:
**FR - A - 1 507 373**
**FR - A - 1 556 441**
**FR - A - 2 348 013**
**GB - A - 1 166 193**
**US - A - 3 263 300**
**US - A - 3 932 924**

(73) Titulaire: **CENTRE D'ETUDES DU FRAISAGE (C.E.F.),**
**80 rue des Meuniers, F-92220 Bagneux (FR)**

(72) Inventeur: **Sachot, Michel, 55, rue Curie, F-91400 Saclay**
**(FR)**

(74) Mandataire: **Loyer, Yves et al, CABINET PIERRE**
**LOYER 18, rue de Mogador, F-75009 Paris (FR)**

ACTORUM AG

## Description

Les machines-outils modernes sont souvent associées avec un dispositif de changement automatique d'outil comprenant généralement un magasin, placé au voisinage immédiat de la machine, et un système de pinces, porté par la machine et agencé pour pouvoir saisir un porte-outil, l'extraire de la broche et le déposer dans un alvéole du magasin ou réaliser l'opération inverse.

Dans certains de ces dispositifs, la pince est double, l'une des ses branches extrayant un porte-outil alors que l'autre est déjà munie du porte-outil de remplacement, une rotation de 180° de l'arbre porte-pinces permettant de passer immédiatement à l'opération de remplacement.

Certains appareils opèrent l'extraction de l'outil par un déplacement de pince rectiligne parallèlement à l'axe de broche, d'autres appareils opèrent cette extraction par rotation de bras porte-pinces selon un axe parallèle à la broche. Dans le premier cas, après extraction, le transfert au magasin est souvent exécuté par rotation du bras. Dans le second cas, le transfert est exécuté par un jeu de rotations et de translations très complexes qui entraîne la précision de plusieurs bras porte-pinces animés chacun de mouvements de translation dans deux directions perpendiculaires et d'un mouvement de rotation.

Un tel dispositif est décrit au brevet USA Anderson N⁰ 3932924 et au brevet français N⁰ 1507373. Selon ces brevets, les deux bras porte-pinces sont montés rotatifs sur des chariots qui coulissent sur des supports, lesquels coulissent eux-mêmes en direction perpendiculaire, et les opérations d'extraction et de mise en place d'un outil sont réalisées par un bras, l'autre ayant la fonction de prise d'outil dans le magasin et d'insertion de l'outil dans la broche.

L'inconvénient que présentent nombre de ces dispositifs est leur complexité, leur encombrement et la nécessité de les placer à proximité ou sur le chariot ou support de la broche, ce qui rend pratiquement inaccessible l'un des côtés de la machine; lorsque l'autre côté de la machine est déjà occupé, comme c'est le cas lorsque la broche est montée sur un chariot coulissant horizontalement sur une console coulissant elle-même verticalement sur un montant fixe latéral, il en résulte une grande incommodité de travail pour l'opérateur qui doit surveiller et commander la machine, ou contrôler la bonne exécution de ses opérations.

Si, pour éviter cet inconvénient, on place le magasin du même côté que le montant de la machine, la distance entre magasin et broche devient importante et le transfert des outils entraîne des complications de réalisation qui obèrent le prix de la machine.

La présente invention a pour objet un dispositif de changement automatique d'outils de réalisation beaucoup plus simple et efficace, et permettant de conserver le libre accès à la partie active de la machine.

Le dispositif selon l'invention est caractérisé en ce qu'il comprend un seul bras porte-pinces dont l'axe de rotation est monté sur un chariot coulissant sur un support fixe selon une direction horizontale perpendiculaire à l'axe, de telle sorte que l'ensemble des mouvements de pince se fait dans un seul plan vertical.

L'opération de changement d'outil étant exécutée sur la broche en position verticale vers le bas, la séquence des mouvements d'extraction du dispositif de l'invention est une translation horizontale jusqu'à engagement de la pince sur le porte-outil, une rotation du bras vers le bas pour dégager le porte-outil de la broche, puis une translation de recul du chariot suivie d'une rotation en sens inverse du bras jusqu'à ramener le porte-outil en position verticale dans un alvéole du magasin, enfin une translation de dégagement de la pince; la séquence des mouvements de prise d'outil dans le magasin et de mise en place dans la broche est la séquence contraire.

Selon une disposition de l'invention, la distance entre le poste de chargement du magasin et l'axe de broche en position de changement est sensiblement égale au double de la longueur du bras porte-pinces additionnée de la course de translation du chariot porte-bras.

L'invention est décrite ci-après avec dessin annexé sur lequel on a représenté un exemple de réalisation. Sur ce dessin:

les fig. 1, 2 et 3 sont des vues de face illustrant schématiquement une machine munie d'un dispositif selon l'invention dans la succession des positions d'extraction ou d'introduction d'outil;

la fig. 4 est une vue de dessus de la même machine avec le changeur automatique dans la position représentée en pointillé (fig. 3);

les fig. 5 et 6 sont des vues de face illustrant les positions du dispositif lorsque la pince est vide;

les fig. 7 et 8 sont des vues de face et de dessus illustrant une variante dans laquelle le bras porte-pinces est muni de deux pinces.

En se reportant à ces figures, on voit que le dispositif est particulièrement conçu pour une machine dans laquelle la tête porte-broche 1 est montée sur un chariot 2 coulissant horizontalement par les glissières 3 sur une console 4, elle-même coulissant verticalement sur un montant ou bâti latéral 5, l'ensemble étant placé devant la table 6.

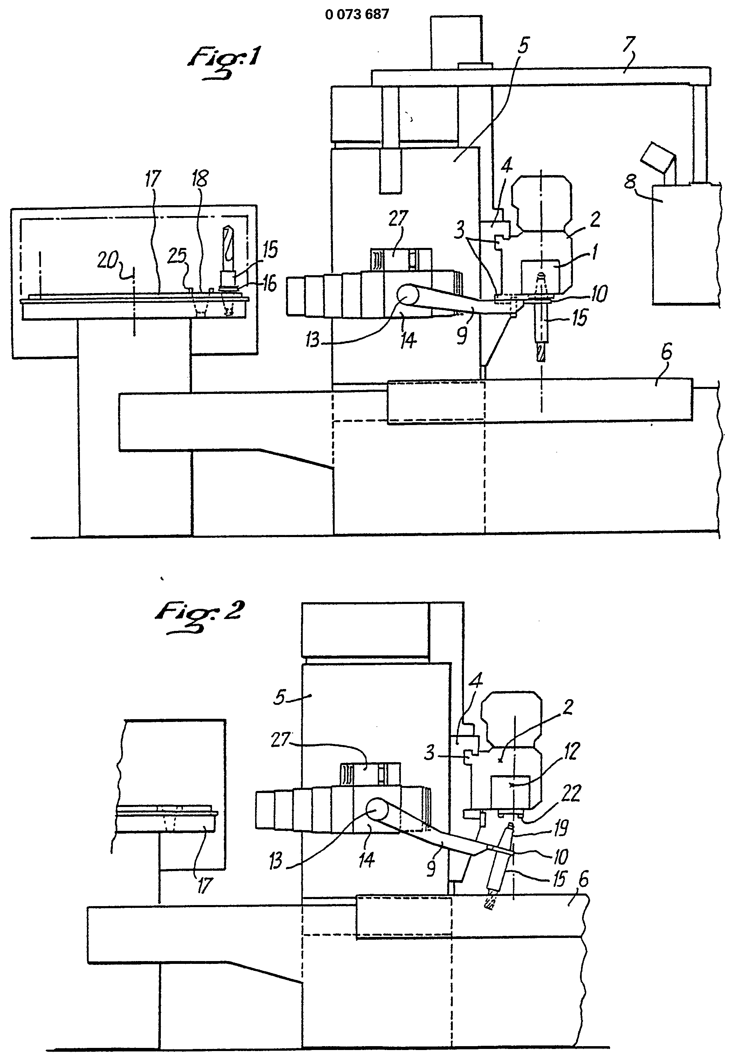

En 7 est représentée, sur la fig. 1, la potence portant les organes de commande 8 de la machine. On voit l'importance qu'il y a à maintenir dégagé le côté du chariot 2 opposé au bâti latéral 5, côté qui doit rester accessible à l'opérateur commandant la machine au moyen des commandes 8.

Le dispositif de changement automatique d'outil de l'invention est prévu pour opérer sur broche en position verticale, outil vers le bas.

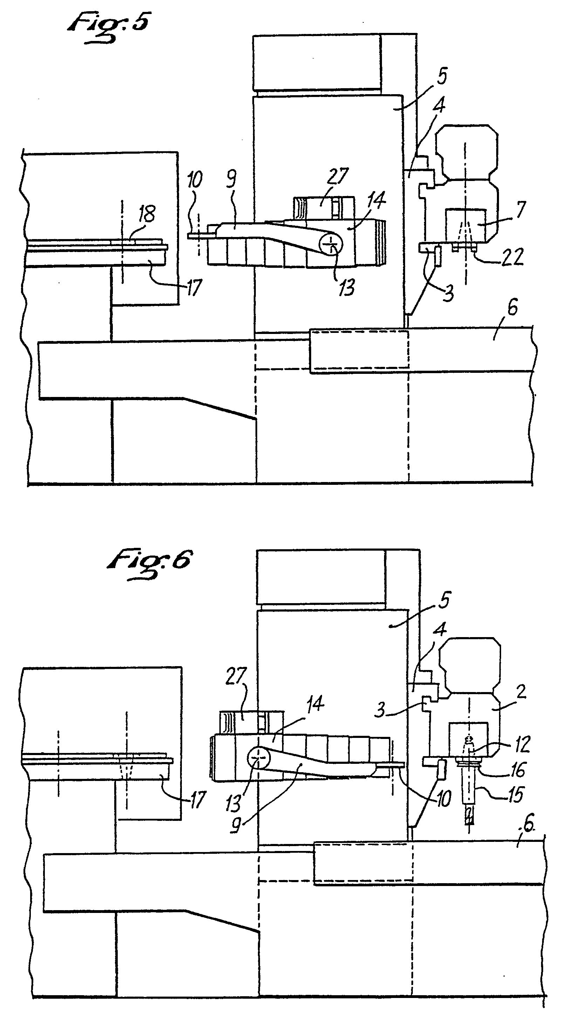

Il se compose d'un bras 9 porte-pinces 10 et des moyens de pivotement et de translation dudit bras dans un plan vertical unique 11 (fig. 4), situé entre la table 6 et le montant fixe 5.

La position du plan 11 est de préférence choisie de façon à contenir l'axe de la broche 12 en position verticale lorsque le chariot 2 est en fin de course arrière, ledit chariot venant se caler dans cette position pour l'opération de changement d'outil.

Le bras porte-pinces 9 est monté pivotant autour de l'axe horizontal 13 perpendiculaire au plan 11 et l'axe 13 est lui-même monté sur un chariot 14 qui coulisse horizontalement et parallèlement au plan 11 sur un support fixe 26, approximativement au niveau que prend la collerette 16 du porte-outil 15 lorsque la broche 12 est en position verticale vers le bas.

Au bras porte-pinces 9 est associé un magasin 17 constitué pour présenter les porte-outil 15 à un poste de changement 18 dans lequel l'axe du porte-outil est vertical, l'outil vers le haut, le cône 19 vers le bas et la collerette 16 au niveau de la translation horizontale de la pince 10.

La longueur de bras séparant la pince 10 de l'axe 13 est choisie en corrélation avec l'angle du cône 19 du porte-outil 15, de telle sorte que le porte-outil pénètre sans frottement dans la broche 12 de la machine et/ou dans la case du magasin 17 située à l'emplacement 18. Cette condition impose une longueur minimale qui peut être dépassée.

Dans l'exemple représenté, le magasin 17 a la forme d'un plateau circulaire, rotatif selon un axe vertical 20, et portant à sa périphérie des alvéoles 21 destinés à recevoir les porte-outil 15. En variante, le magasin peut être réalisé sous la forme d'une chaîne dont les maillons portent les alvéoles 21. La variante en forme de plateau tournant convient pour un magasin pouvant contenir jusqu'à 30-40 outils; au-delà de ce nombre et notamment pour un magasin de l'ordre de 100 outils ou davantage, la variante en forme de chaîne (connue en soi et non représentée) est préférable pour limiter l'encombrement.

La séquence des mouvements du dispositif de l'invention est la suivante:

Le chariot 2 étant en position arrière et le changeur d'outil dans la position d'attente de la fig. 6, le chariot 14 est déplacé par translation vers la broche 12 jusqu'à ce que la pince 10 vienne en prise avec la collerette 16 du porte-outil 15 (fig. 1).

Par une rotation du bras 9 vers le bas, le porte-outil 15 est complètement dégagé de la broche (fig. 2).

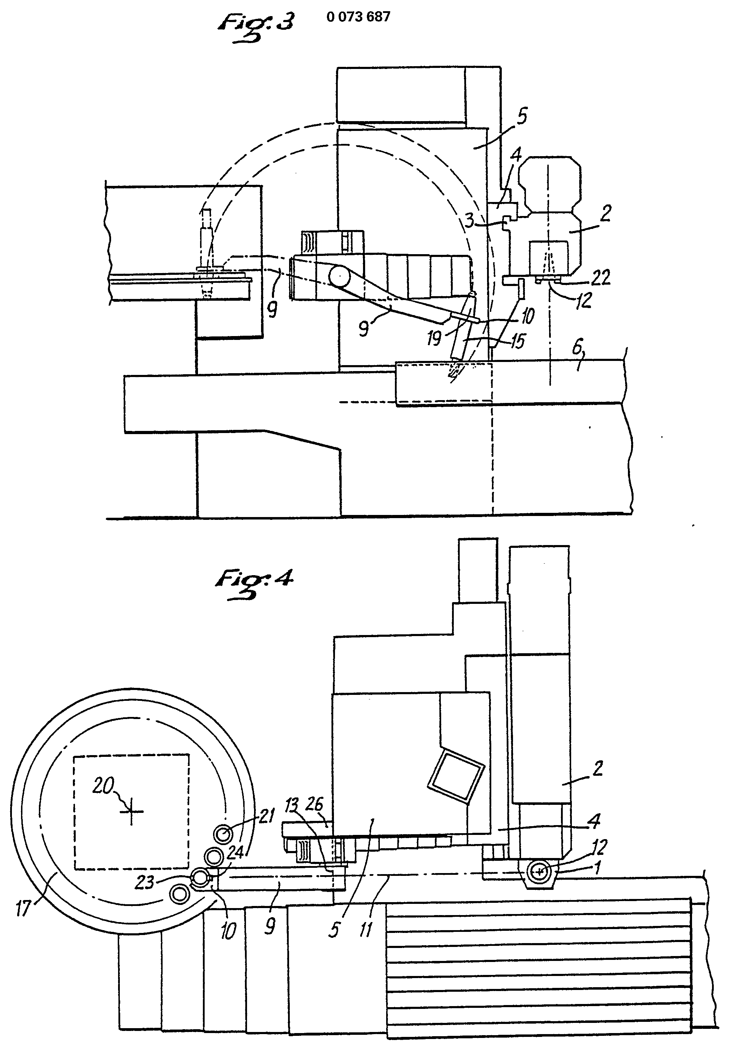

Une translation du chariot 14 vers le magasin 17 place l'axe 13 dans une position permettant la rotation du bras 9 sans interférence avec le chariot 2 (fig. 3).

La rotation du bras 9 transporte le porte-outil 15 dans l'alvéole 18 du magasin 17 (fig. 3, pointillé et fig. 4) (rotation de 180°).

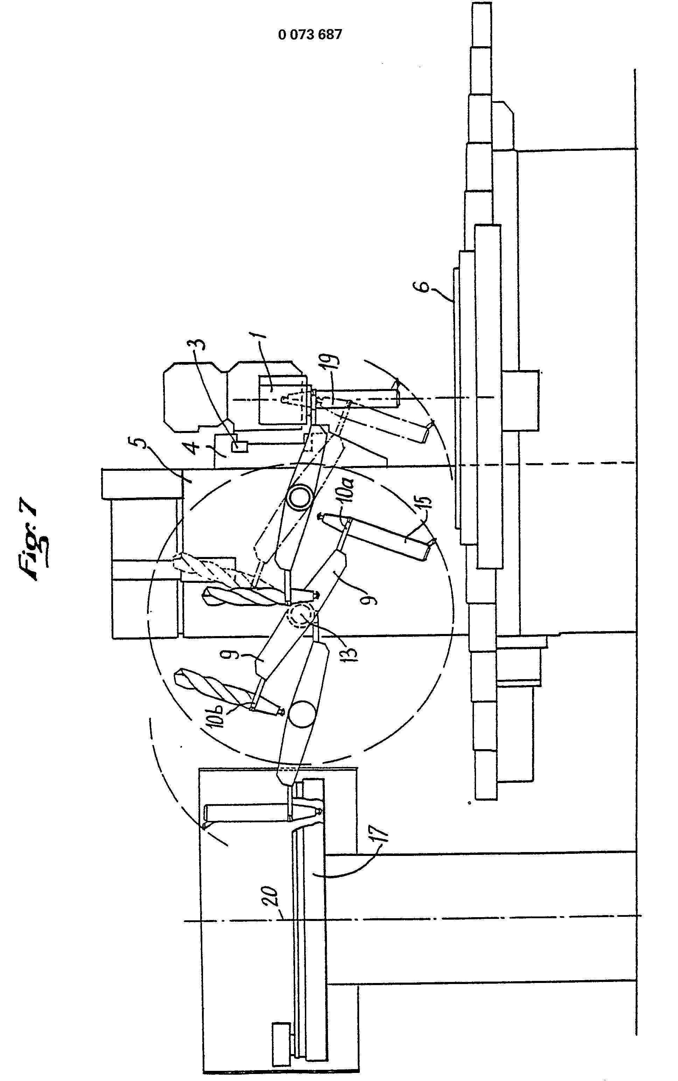

Une translation du chariot 14 vers la broche 12 dégage la pince 10 de l'outil ainsi déposé dans le magasin (fig. 5).

Pour la mise en place d'un autre outil, placé au poste 18 par le magasin, le bras 9 subit la séquence de déplacements inverse, de la fig. 5 à la fig. 1, pour ensuite prendre la position d'attente de la fig. 6.

Dans l'exemple représenté, le bras 9 ne porte qu'une seule pince 10. Mais il va de soi que le bras 9 peut être articulé en son centre sur l'axe 13 et porter deux pinces 10 opposées. Dans ce cas, deux mouvements de translation du chariot 13 seront prévus de part et d'autre de la position principale de rotation de la fig. 3.

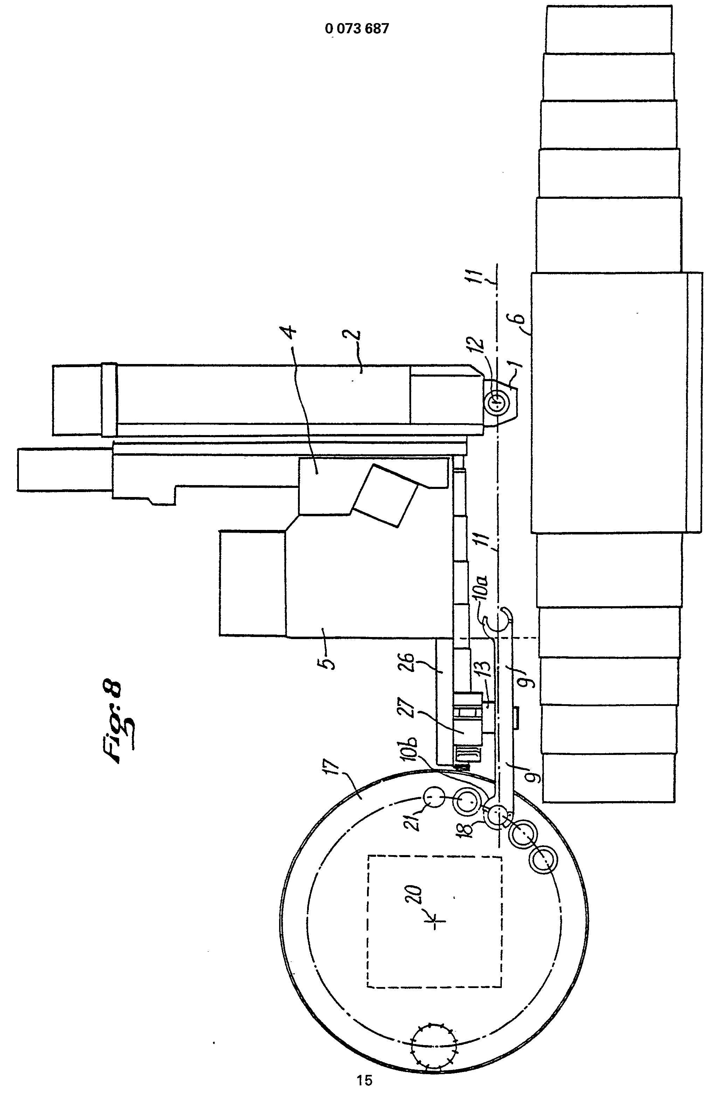

Cette variante de réalisation est schématiquement représentée sur les fig. 7 et 8.

Les mêmes organes ont les mêmes chiffres de référence que sur les fig. 1 à 6. Le bras 9 est articulé en 13 en son centre et porte deux pinces 10a, 10b symétriques par rapport à l'axe 13.

Dans cette variante, la translation du bras 9 occupe trois positions principales, l'une vers la broche 12 correspondant à la mise en place et au retrait des outils, l'autre vers le magasin 17 pour le dépôt et la prise d'outil, et une position centrale de rotation à 180°. Dans les deux positions extrêmes, le bras 9 est soumis à la rotation nécessaire au dégagement de l'outil hors de la broche ou hors du magasin.

La variante des fig. 7 et 8 permet de réduire le temps de changement d'outil.

Il est à noter que les branches du bras 9 portant les pinces 10a et 10b ne sont pas nécessairement symétriques par rapport à l'axe 13 et peuvent être disposées comme les branches d'un V plus ou moins ouvert, ou même d'un Y si le bras 9 comporte trois branches.

L'invention prévoit, en outre, les dispositions préférentielles ci-après:

Un détecteur placé dans la pince 10 informe le système de commande de pivotement du bras 9 de la présence ou de l'absence d'un porte-outil 15 dans ladite pince; lorsque la pince est vide, ce système de commande arrête la rotation du bras 9, de telle sorte que la pince 10 se trouve au niveau de la collerette 16 des porte-outil 15 tant sur la broche 12 que sur le poste 18 du magasin 17. Lorsqu'un porte-outil 15 est sur la pince 10, la rotation du bras 9 est autorisée selon la séquence exposée plus haut.

La forme de la pince 10 est complémentaire au profil de la collerette 16 et la pince 10 comprend un moyen élastique ou commandé (par exemple électriquement ou hydrauliquement) non représenté, assurant le serrage de la pince 10 sur la collerette 16 pendant la manipulation des outils ainsi que le desserrage automatique lorsque l'outil est serré dans la broche 12 ou déposé au poste 18 du magasin 17. La tête porte-broche 1 comprend un moyen de positionnement des porte-outil 15 selon une orientation constante par rapport à la pince 10, de façon à permettre l'introduction des lardons d'entraînement 22 de la broche 12 dans des encoches 23 prévues sur les collerettes 16. Une protubérance 24, coagissant avec l'une des encoches 23, est prévue sur la pince 10 pour la conservation de cette orientation pendant le transfert.

Les alvéoles 21 du magasin ont une forme adaptée au cône 19 des porte-outil. Le magasin peut être chargé manuellement. Chaque alvéole 21 comporte en outre un élément fixe 25 (fig. 1) analogue aux lardons 22 qui rend impossible l'introduction d'un porte-outil 15 dans le magasin selon une orientation autre que celle correspon-

dant à l'orientation de la broche 12 en position de chargement.

Les mouvements de rotation et translation du bras 9 sont assurés par tous moyens appropriés, notamment hydrauliques. Dans l'exemple représenté, on a prévu des moteurs électriques à courant continu 27 associés à des réducteurs mécaniques entraînant des vis sans fin (ou vis à billes).

Ces mouvements sont de préférence asservis dans le cadre d'un système de commande numérique, et l'enchaînement en séquence des mouvements nécessaires au changement d'outil est de préférence piloté par le dispositif de programmation automatique qui assure la gestion des autres fonctions de la machine.

La machine elle-même peut être de type très divers pour autant qu'elle comporte une position à broche 12 verticale permettant l'adaptation du dispositif de l'invention.

En particulier, la tête 1 peut être orientable ou non, le chariot 2 coulisser sur un bâti fixe ou sur une console mobile verticalement, etc.

Diverses variantes peuvent être adoptées sans sortir des revendications de l'invention. C'est ainsi que le plan 11, représenté dans l'exemple décrit, parallèle à l'axe de la table, peut être disposé en oblique de façon à éloigner le magasin 17 de la table.

De même, la translation du chariot 14 peut être prévue oblique par rapport à l'horizontale, pour autant que le système de pinces autorise une obliquité dans l'opération de prise de la collerette 16 du porte-outil.

## Revendications

1. Dispositif de changement automatique du porte-outil (15) pour machine-outil comprenant une tête porte-outil montée sur un premier chariot (2) coulissant horizontalement et ayant une position à broche verticale du type dans lequel le dégagement de la broche (12) et le transfert du porte-outil (15) se fait par rotation de porte-pinces autour d'un axe (13) horizontal et translation horizontale de cet axe entre la broche (12) et le magasin (17), l'introduction et/ou l'extraction du porte-outil (15) dans la broche d'une part et dans le magasin d'autre part se faisant par rotations de sens inverses, caractérisé en ce que le dispositif comporte un seul bras (9) porte-pinces (10) dont l'axe de rotation (13) est monté sur un deuxième chariot (14) coulissant sur un support fixe (26) selon une direction horizontale perpendiculaire à l'axe (13), de telle sorte que l'ensemble des mouvements de pince se fait dans un seul plan vertical (11).

2. Dispositif selon la revendication 1, caractérisé en ce qu'il comporte des moyens pour assurer en séquence, en vue de l'extraction d'un outil, une translation horizontale du bras (9) jusqu'à engagement de la pince (10) sur le porte-outil (15) placé dans la broche (12), une rotation du bras (9) vers le bas pour dégager le porte-outil (15) de la broche (12), puis une translation de recul du deuxième chariot (14) suivie d'une rotation de 180° en sens inverse du bras (9) jusqu'à ramener le porte-outil (15) en position d'introduction dans un alvéole (18) du magasin (17), laquelle après une éventuelle translation complémentaire est suivie d'une rotation d'introduction, enfin une translation de dégagement de la pince (10), ainsi que pour assurer la séquence inverse en vue de la prise du porte-outil dans le magasin (17) et sa mise en place dans la broche (12).

3. Dispositif selon l'une des revendications précédentes, caractérisé en ce que le plan vertical (11) est placé de façon à contenir l'axe de la broche (12) en position verticale lorsque le premier chariot (2) est en fin de course arrière.

4. Dispositif selon l'une des revendications précédentes, caractérisé en ce que le bras (9) porte plusieurs pinces (10).

5. Dispositif selon l'une des revendications précédentes, caractérisé en ce que la longueur de bras séparant la pince (10) de l'axe (13) est choisie en corrélation avec l'angle du cône (19) du porte-outil (15), de telle sorte que le porte-outil pénètre sans frottement dans la broche (12) de la machine et/ou dans la case du magasin (17) située à l'emplacement (18).

6. Dispositif selon l'une des revendications précédentes, caractérisé en ce que la pince (10) comprend un détecteur de présence d'outil agissant sur le système de commande du pivotement du bras (9).

7. Dispositif selon la revendication 6, caractérisé en ce que, lorsque la pince (10) est vide, le système de commande du pivotement du bras (9) arrête celui-ci dans une position où la pince (10) est au niveau de la collerette (16) des porte-outil (15) sur la broche (12) ou le magasin (17).

8. Dispositif selon l'une des revendications précédentes, caractérisé en ce que la tête (1) portant la broche (12) comporte des moyens pour positionner les porte-outil (15) selon une position constante par rapport à la pince (10), et les collerettes (16) des porte-outil (15) comprennent des encoches (23) coagissant avec des lardons (22) portés par la broche (12), avec une protubérance (24) prévue dans la pince (10) et avec au moins un élément fixe (25) prévu dans chaque alvéole (21) du magasin (17).

9. Dispositif selon l'une des revendications précédentes, caractérisé en ce que les mouvements de rotation et translation du bras (9) sont asservis par tous moyens appropriés, et l'enchaînement en séquence des mouvements nécessaires au changement d'outil est piloté par le dispositif de programmation automatique qui assure la gestion des autres fonctions de la machine.

10 Dispositif selon l'une des revendications précédentes, caractérisé en ce que le bras (9) est articulé en son centre et comporte deux pinces (10) symétriques par rapport à l'axe de rotation (13), le mouvement de rotation de 180° du bras (9) ayant lieu en une position centrale de part et d'autre de laquelle ont lieu les mouvements de translation et de rotation pour la prise et le dégagement des porte-outil (15).

## Patentansprüche

1. Vorrichtung zum automatischen Auswechseln des Werkzeugträgers (15) an einer Werkzeugmaschine, die einen auf einem ersten Wagen (2) montierten Werkzeugträgerkopf aufweist, wobei der Wagen waagerecht gleitet und eine Position mit senkrechtem Werkzeugfutter aufweist, wobei die Vorrichtung von der Art ist, bei der die Werkzeugentnahme aus dem Futter (12) und der Transfer des Werkzeugträgers (15) durch Drehung von Zangenträgern um eine waagerechte Achse (13) und durch waagerechte Verschiebung dieser Achse zwischen einem Futter (12) und einem Magazin (17) erfolgt und bei der das Laden und/oder Entladen des Werkzeugträgers (15) einerseits am Futter und andererseits am Magazin durch Drehungen in entgegengesetzten Richtungen geschieht, dadurch gekennzeichnet, dass die Vorrichtung einen einzigen Zangenträgerarm (9) aufweist, dessen Drehachse (13) auf einem zweiten Wagen (14) montiert ist, welcher gemäss einer waagerechten, zur Achse (13) senkrechten Richtung auf einem festen Träger (26) gleitet, derart, dass die Gesamtheit der Zangenbewegungen in einer einzigen senkrechten Ebene (11) erfolgt.

2. Vorrichtung nach Anspruch 1, dadurch gekennzeichnet, dass sie Mittel aufweist, um nacheinander zur Entnahme eines Werkzeugs folgende Bewegungen zu bewirken, nämlich eine waagerechte Verschiebung des Armes (9), bis die Zange (10) den Werkzeugträger (15) im Futter (12) erfasst, eine Drehung des Armes (9) nach unten, um den Werkzeugträger (15) vom Futter (12) zu lösen, dann eine Verschiebung des zweiten Wagens (14) nach rückwärts, gefolgt von einer Drehung des Armes (9) in entgegengesetzter Richtung um 180°, bis der Werkzeugträger (15) in eine Einsetzposition in ein Fach (19) des Magazins gelangt, gefolgt nach einer eventuellen ergänzenden Verschiebung von einer Einführungsdrehung und schliesslich von einer Verschiebung zur Entfernung der Zange (10), wobei die umgekehrte Folge bewirkt wird, um einen Werkzeugträger aus dem Magazin (17) aufzunehmen und im Futter (12) anzuordnen.

3. Vorrichtung nach einem der vorhergehenden Ansprüche, dadurch gekennzeichnet, dass die senkrechte Ebene (11) so angeordnet ist, dass sie die Achse des Futters (12) in senkrechter Lage einschliesst, wenn der erste Wagen (2) am hinteren Ende seines Verschiebewegs ist.

4. Vorrichtung nach einem der vorhergehenden Ansprüche, dadurch gekennzeichnet, dass der Arm (9) mehrere Zangen (10) trägt.

5. Vorrichtung nach einem der vorhergehenden Ansprüche, dadurch gekennzeichnet, dass die Länge des Arms zwischen der Zange (10) und der Achse (13) in Verbindung mit dem Konuswinkel (19) des Werkzeugträgers (15) so gewählt ist, dass der Werkzeugträger ohne Reibung in das Futter (12) der Maschine eingreift und/oder in das Magazinfach an der Stelle (18) eindringt.

6. Vorrichtung nach einem der vorhergehenden Ansprüche, dadurch gekennzeichnet, dass die Zange (10) einen Detektor für die Anwesenheit des Werkzeugs enthält, der auf das Steuersystem für die Schwenkung des Arms (9) einwirkt.

7. Vorrichtung nach Anspruch 6, dadurch gekennzeichnet, dass das Steuersystem für das Schwenken des Arms (9) den Arm in einer Position anhalten lässt, in der die Zange (10) in Höhe des Kragens (16) der Werkzeugträger (15) auf dem Futter (12) oder dem Magazin (17) ist, wenn die Zange (10) leer ist.

8. Vorrichtung nach einem der vorhergehenden Ansprüche, dadurch gekennzeichnet, dass der Kopf (1), der das Futter (12) trägt, Mittel zur Positionierung der Werkzeugträger (15) in einer konstanten Lage bezüglich der Zange (10) aufweist und dass die Kragen (16) der Werkzeugträger (15) Nuten (23) besitzen, die mit auf dem Futter (12) angebrachten Vorsprüngen (22), mit einem Vorsprung (24) an der Zange (10) und mit mindestens einem festen Element (25) zusammenwirken, das in jedem Fach (21) des Magazins (17) vorgesehen ist.

9. Vorrichtung nach einem der vorhergehenden Ansprüche, dadurch gekennzeichnet, dass die Dreh- und Verschiebebewegungen des Arms (9) durch ein beliebiges geeignetes Mittel gesteuert werden und dass der Folgeablauf der für den Wechsel eines Werkzeugs notwendigen Bewegungen von der automatischen Programmiervorrichtung gesteuert wird, die die Bearbeitung der anderen Funktionen der Maschine sicherstellt.

10. Vorrichtung nach einem der vorhergehenden Ansprüche, dadurch gekennzeichnet, dass der Arm (9) in seinem Zentrum gelenkig gelagert ist und zwei bezüglich der Drehachse (13) symmetrische Zangen (10) aufweist, wobei die Drehbewegung des Arms (9) um 180° in einer zentralen Lage erfolgt, während zu beiden Seiten dieser Lage die Verschiebe- und Drehbewegungen für die Aufnahme und das Ablegen der Werkzeugträger (15) stattfinden.

## Claims

1. Device for automatic change of the toolholder (15) for a machine-tool comprising a tool-holding head mounted on a first horizontally slidable carriage (2) and having a vertical spindle position of the type in which the release from the spindle (12) and the transfer of the tool-holder (15) is made by means of a rotation of tongs-carrying members about a horizontal axis (13) and of a translation of the axis between the spindle (12) and the magazine (17), the introduction and/or the extraction of the tool-holder (15) into the spindle on one part and into the magazine on the other part being made by means of rotations in opposite directions, characterized in that this device comprises a single arm (9) carrying tongs (10), the rotation axis (13) of said arm being mounted on a second carriage (14) slidable on a stationary support (26) along a horizontal direction perpendicular to the axis (13) so that all the movements of the tongs take place in a single vertical plane (11).

2. Device according to Claim 1, characterized in that it comprises means for sequentially carrying out, for the extraction of a tool, a horizontal translation of the arm (9) until the tongs (10) engage the tool-holder (15) placed in the spindle (12), a downward rotation of the arm (9) for releasing the tool-holder (15) out of the spindle (12), and then a rearward translation of the second carriage (14) followed by a 180° rotation of arm (9) in the opposite direction until the tool-holder (15) is brought into position for being introduced into a socket (18) of the magazine (17), said rotation being followed, after an eventual complementary translation, by a further rotation for the introduction and finally by a translation for releasing the tongs (10), said means being further designed for carrying out the inverse sequence for taking a tool-holder out of the magazine (17) and placing it into the spindle (12).

3. Device according to any of the above claims, characterized by the vertical plane (11) being located so that it contains the axis of the spindle (12) in vertical position when the first carriage (2) is at full rearward stroke.

4. Device according to any of the above claims, characterized in that the arm (9) carries several sets of tongs (10).

5. Device according to any of the above claims, characterized in that the arm length separating the tongs (10) from the axis (13) is selected in correlation with the angle of the cone (19) of the tool-holder (15) so that the tool-holder will penetrate frictionlessly into the spindle (12) of the machine and/or into the socket of the magazine (17) situated at location (18).

6. Device according to any of the above claims, characterized in that the tongs (10) comprise a sensor for detecting the presence of a tool and for acting on the control system of the rotation of arm (9).

7. Device according to Claim 6, characterized in that, when the tongs (10) are empty, the control system of the rotation of arm (9) will stop said arm in a position in which the tongs (10) will be at the level of the collar (16) of the tool-holders (15) on the spindle (12) or on the magazine (17).

8. Device according to any of the above claims, characterized in that the head (1) carrying the spindle (12) comprises means for positioning the tool-holders (15) in a constant position relatively to the tongs (10), and the collars (16) of the tool-holders (15) are provided with notches (23) cooperating with lugs (22) on the spindle (12), with a projection (24) formed on the tongs (10) and with at least one fixed element (25) provided in each socket (21) of the magazine (17).

9. Device according to any of the above claims, characterized in that servo-drive means of any appropriate type are provided for the rotation and translation motions of arm (9), and the sequential progression of the motions required for the tool change is piloted by the automatic programming device of the machine which controls the other functions of the machine.

10. Device according to any of the above claims, characterized in that the arm (9) is articulated in its center and comprises two tongs (10) arranged symmetrically about the rotation axis (13), the 180° rotary motion of arm (9) taking place in a central position on either side of which are taking place the translation and rotary motions for seizing and releasing the tool-holders (15).

*Fig:1*

*Fig:2*

7

*Fig. 3*

*Fig. 4*

Fig.5

Fig.6

Fig. 7

Fig. 8

0 073 687